(19) Europäisches Patentamt

European Patent Office

Office européen des brevets

(11) **EP 1 215 055 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
***B60C 11/12*** *(2006.01)*

(21) Anmeldenummer: **00127194.9**

(22) Anmeldetag: **12.12.2000**

(54) **Fahrzeugreifen mit Laufflächenprofil für guten Schnee- und Eisgriff**

Vehicle tyre with thread having good grip on snow and ice

Bandage pneumatique pour véhicule, pourvu d'un profil de bande de roulement ayant des propriétés de traction sur neige et glace ameliorées

(84) Benannte Vertragsstaaten:
**AT CH DE FI FR LI SE**

(43) Veröffentlichungstag der Anmeldung:
**19.06.2002 Patentblatt 2002/25**

(73) Patentinhaber: **Continental Aktiengesellschaft**
**30165 Hannover (DE)**

(72) Erfinder:
• **Dörrie, Helge**
**30823 Garbsen (DE)**
• **Diensthuber, Franz**
**30559 Hannover (DE)**

(56) Entgegenhaltungen:
**EP-A- 0 485 883**          **US-A- 5 301 727**

• **PATENT ABSTRACTS OF JAPAN vol. 2000, no. 11, 3. Januar 2001 (2001-01-03) & JP 2000 225814 A (BRIDGESTONE CORP), 15. August 2000 (2000-08-15)**
• **PATENT ABSTRACTS OF JAPAN vol. 1998, no. 10, 31. August 1998 (1998-08-31) & JP 10 114205 A (BRIDGESTONE CORP), 6. Mai 1998 (1998-05-06)**

**Beschreibung**

Die Erfindung betrifft laut dem Oberbegriff des Anspruchs 1 einen Fahrzeugreifen mit einem Laufflächenprofil für guten Schnee- und Eisgriff.

Zu diesem Zwecke weist das Laufflächenprofil in bekannter Weise innerhalb von Profilpositiven im Wesentlichen zueinander parallele Einschnitte auf. Dabei wird der Begriff "Profilpositive" als Oberbegriff sowohl für "Klötze" oder auch "Blöcke", also für erhabene Profilbereiche, die nicht nur in der axialen Richtung sondern auch in der Umfangsrichtung durch Rillen begrenzt sind, benutzt, als auch für "Rippen",also für erhabene Profilbereiche, die nur in der axialen Richtung begrenzt sind, während sie sich über den gesamten Umfang erstrecken.

Üblicherweise - und auch bei vorliegender Erfindung - werden solche Einschnitte in der Art eines Linienrasters verteilt angeordnet, was bedeutet, dass der Abstand von Einschnitt zu Einschnitt im Wesentlichen konstant ist. Die Worte "im Wesentlichen" sind dadurch konkretisiert, dass für alle Paare aus je zwei benachbarten Einschnitten innerhalb des selben Profilpositiven gilt, dass der größte Abstand von Einschnitt zu Einschnitt höchstens um 20% größer ist als der kleinste Abstand. Dabei soll der mittlere Abstand zwischen zwei benachbarten Einschnitten zwischen 3 mm und 7 mm betragen. Zumindest für nicht drehsinngebundene Reifen ist es bevorzugt, den Einschnittabstand innerhalb eines jeden Profilpositiven exakt konstant zu halten innerhalb des oben angegebenen Maßintervalles.

Von dem Semperit-Winterreifen "Direction-Grip" her, wie er beispielsweise in der "Gummibereifung" 11/1988 auf den Seiten 22 und 23 beschrieben ist, ist es bekannt, eine Vielzahl von Einschnitten so auszubilden, dass sie in der Draufsicht zumindest einen nahezu rechtwinkelig treppenartigen Versatzteil aufweisen. Dabei sollen die Worte "nahezu rechtwinkelig" einen Winkel zwischen 75° und 105° ansprechen. Der gleichen Quelle ist auch das Merkmal zu entnehmen, dass die Länge des Versatzteiles höchstens die Hälfte der Länge des Hauptteils des Einschnittes beträgt.

Den Reifenfachleuten ist bekannt, dass die Steifigkeit eines einschnittlosen Positiven gegenüber einer radial angreifenden Kraft in der Positivmitte größer ist als am Positivrand. Infolgedessen ist die Flächenpressung in Positivmitte größer als am Positivrand.

Den Fachleuten ist ferner bekannt, dass der Reibungsbeiwert $\mu$ bei abnehmender Pressung höher wird. Wenn die Kontakfläche nicht vergrößert und die zu tragende Masse nicht reduziert werden kann, dann soll deshalb wenigstens über der zur Verfügung stehenden Kontakfläche die Pressung möglichst konstant sein. In Verbindung mit der im Absatz zuvor genannten Lehre folgern hieraus die Reifenfachleute, dass Maßnahmen ergriffen werden sollten, um Positive in ihrer Mitte ähnlich weich zu bekommen, wie sie am Positivrande sind. Wenngleich die DE-AS 24 32 363 (1981) sich um eine verbesserte Wasserabführung aus der Bodenaufstandsfläche bemüht, so wird hier doch bereits eine gewisse Mittenaufweichung von Profilklötzen erreicht.

Eine wirkungsvollere Maßnahme, nämlich ein klotzmittiger, nicht den Klotzrand durchschneidender Sackeinschnitt, kann dem deutschen Geschmacksmuster M 93 01 038 (1993) oder der AVON Reifentype CR38 auf Seite 114 der "Gummibereifung" 7/1996 entnommen werden.

Der Reifentype "Energy" von Michelin, wie sie in der "Gummibereifung" 1/1997 auf Seite 94 abgebildet ist, ist insbesondere in der zweiten Klotzreihe von links eine weitere Maßnahme zur Konzentration einer einschnittbedingten Klotzaufweichung auf die Klotzmitte zu entnehmen, nämlich etwa axial verlaufende Halbsackeinschnitte in Verbindung mit je einem kreuzenden Längseinschnitt. Die Klotzaufweichung ist am größten an den Einschnitt-Kreuzungen.

Alle diese Maßnahmen haben aber den Nachteil, dass neben der erstrebten Aufweichung der Klotzmitte gegenüber radial angreifenden Kräften, also neben der angestrebten Verringerung der Stauchsteifigkeit in Klotzmitte, auch die Biegesteifigkeit in Klotzmitte reduziert wird, sodass angreifende Tangentialkräfte wie Antriebs- oder Bremskräfte zu einer vergrößerten Verkippung der durch die Einschnitte voneinander separierten Klotzteile führen. Dies verbessert zwar ein wenig die Griffigkeit auf verschneiten Straßen, verschlechtert aber auf vereisten Straßen den dort ohnehin kritischsten Reibungsbeiwert ganz deutlich, weil die genannte Verkippung fast die gesamte Flächenpressung auf die winzigen Kantenflächen konzentriert. Kurzum, die verringerte Biegesteifigkeit frisst den Vorteil der verringerten Stauchsteifigkeit in Klotzmitte für die kritischste Disziplin eines Winterreifens, die Eisgriffigkeit, auf.

Aufgabe der Erfindung ist es, eine solche Profilgeometrie zu schaffen, die die Stauchsteifigkeit in Klotzmitte reduziert bei höherem Erhalt von Biegesteifigkeit daselbst.

Die Aufgabe wird durch den Fahrzeugreifen mit den Merkmalen des Patentanspruchs 1 gelöst. Ausgehend von den gattungsbildenden Merkmalen ist dieser erfindungsgemäße Reifen dadurch gekennzeichnet,

- dass die Versatzteile in benachbarten Einschnitten des selben Profilpositiven gegeneinander versetzt sind,
- und zwar so, dass sich zwischen den besagten Versatzteilen jeweils ein Gummisteg befindet, dessen Erstreckung quer zur Erstreckung der beiden angrenzenden Hauptteile nur 30% bis 70 % des Abstandes zwischen den Hauptteilen beträgt.

Die Erstreckung des besagten Steges entlang der beiden angrenzenden Hauptteile sollte vorzugsweise das 0,6-fache bis 2-fache des Abstandes zwischen den Hauptteilen betragen.

Dieser besagte Steg hat aufgrund der allseitigen Nähe von Einschnitten die gewünschte verringerte Stauchsteifigkeit; seine Biegesteifigkeit ist hingegen kaum reduziert aufgrund der winkeligen Anbindung an die benachbarten Positivteile zwischen den Hauptteilen von je zwei aufeinanderfolgenden Einschnitten.

Die mit der Erfindung erreichbaren Vorteile sind besonders wichtig im Laufflächenmittenbereich. Aufgrund der im Absatz zuvor geschilderten Bedeutung des Einschnittversatzes empfiehlt es sich daher insbesondere für den Laufflächenmittenbereich, den Effekt dadurch zu maximieren, dass jeder Einschnitt genau zwei Hauptteile aufweist und genau einen mittig angeordneten Versatz, wie dies Anspruch 4 herausstellt. Wesentlich ist, dass es nirgends in der Abfolge von Hauptteil, Versatz und Hauptteil eine Unterbrechung des Einschnittes gibt.

Die Erfindung funktioniert so gut, dass auf Sackenden der Einschnitte - wie sie die bereits gewürdigten M 93 01 038 und Gummibereifung 7/1996, Seite 114 beidseitig und Gummibereifung 1/1997, Seite 94 einseitig zeigen - ganz verzichtet werden kann. Trotz der Durchschneidung des Klotzrandes und seiner damit einhergehenden Aufweichung erhält der Klotz eine etwa gleichmäßige Stauchsteifigkeit wegen der besonders großen aufweichenden Wirkung der durch die Versätze gebildeten schmalen Gummistege.

Der so ermöglichte Verzicht auf Sackenden der Einschnitte hat den konstruktiven Vorteil, dass so die Einschnittkantenlänge größer wird ohne kostspielige Erhöhung der Einschnittanzahl. Sie hat überdies einen Vorteil für den Vorrichtungsbau: Zur Erzeugung erfindungsgemäßer Einschnitte im Reifen werden in den profilprägenden Segmenten der Vulkanisationsform dünne Bleche verankert, die sogenannten Lamellen. Wo eine Lamelle - wie für die hier gelehrten Einschnitte an deren Enden erforderlich - im Wesentlichen gerade ist, ergibt sich insbesondere in großer Entfernung von dem erfindungsgemäßen Lamellenversatz ein Beulproblem beim Schließen der Vulkanisationsform. Ein solches flächiges Ausknicken (=Ausbeulen) entsteht dann, wenn die Lamellendicke im Verhältnis zur Formschließkraft zu gering ist; insbesondere an den Segmentgrenzen überlagern sich dem noch in nachteiliger Weise Scherkräfte infolge tangentialer Kautschukfließbewegungen.

Besonders dünne Einschnitte führen, weil sie eine besonders dichte Einschnittanordnung ermöglichen, zur maximalen Griffigkeit; sie erfordern aber eine entsprechende Dünnheit der Lamellen. In der Bemessung der Lamellendicke besteht also ein Konflikt zwischen dem Vorrichtungsbauer einerseits, der zuverlässig beulbeständige und darum dicke Lamellen wünscht, und dem Reifenkonstrukteur andererseits, der dünnere Lamellen wünscht.

Wo ein Einschnitt einen Klotzrand im Reifen durchschneiden darf, kann in der Vulkanisationsform die den Einschnitt erzeugende Lamelle am gegossenen Steg der Vulkanisationsform zusätzlich befestigt sein, welcher im Reifen die den Klotz begrenzende Profilrille einprägt. Infolge dieser zusätzlichen Abstützung der Lamelle an ihrer ansonsten beulempfindlichsten Stelle ist eine besonders dünne Lamellenbemessung möglich. Für die geläufigsten Reifenbreiten (175 bis 195 einschließlich) beträgt die kleinstmögliche Lamellendicke etwa 0,4 mm.

Gemäß Anspruch 2 soll die Länge des Hauptteiles vorzugsweise das 1,5-fache bis 3-fache des mittleren Abstandes zwischen benachbarten Einschnitten betragen. Wo die Einschnittlänge aufgrund der Klotzgeometrie beispielsweise 24 mm beträgt, jeder Hauptteil also etwa 12 mm lang ist, soll der mittlere Abstand zwischen benachbarten Einschnitten also 8 mm bis 4 mm betragen.

Bei schmaleren Klötzen für besonders schmale Reifengrößen (165 und darunter) und dementsprechend kürzeren Hauptteilen der Einschnitte ist ein kleinerer Einschnittabstand günstiger, um trotz der kleineren Aufstandsfläche eine genügende Kantenlängensumme für die Schneegriffigkeit bereit zu stellen. Weil der Abstützeffekt am Lamellenrande durch die kürzere Lamellenlänge noch ausgeprägter ist, kann die Lamellendicke noch etwas weiter reduziert werden, beispielsweise bis auf 0,35 mm.

Bei breiteren Reifen (ab 205 und darüber) nimmt man zweckmäßigerweise entweder eine Klotzreihe mehr als die als bevorzugt dargestellten sechs Reihen oder man wählt passend zur erforderlichen dickeren Lamellenbemessung, beispielsweise 0,5 mm, einen größeren Einschnittabstand.

Ein zu geringer Einschnittabstand würde die zwischen den Einschnitten verbleibenden Positivteile zu biegeweich werden lassen und infolge der Stirnseitenverkippung zu einer zu ungleichmäßigen Pressungsverteilung und damit einem schlechten Reibungsbeiwert auf Eis und auf trockener Straße führen. Ein zu großer Einschnittabstand hingegen würde infolge der einhergehenden Abnahme der Kantenlängensumme einen zu starken Griffigkeitsabfall auf verschneiter Straße bewirken.

Die Erfindung wird gemäß Anspruch 3 vorzugsweise mit dem bewährten Merkmal kombiniert, dass die axial äußeren Profilpositive in der axialen Richtung von größerer Erstreckung sind als die Profilpositive im Laufflächenmittenbereich. Um von der Erfindung auch dort - wenn auch mit reduziertem, aber immer noch positivem Effekt - Gebrauch machen zu können, sollen dabei die Einschnitte in den axial äußeren Profilpositiven (4) mehrfach getreppt sein.

Zwecks bester Längskraftübertragung sollten die Hauptteile der Einschnitte genau axial verlaufen, also in der Draufsicht einen Winkel von 90° zur Umfangsrichtung einnehmen; allerdings würden sie so ausgerichtet nicht zur Übertragbarkeit von Seitenführungskräften beitragen. Eine demgegenüber erhebliche Steigerung der Übertragbarkeit von Seitenführungskräften bei nur geringfügiger Verschlechterung erreicht man durch eine Neigung der Einschnitte um 10° bis 30° zur Axialen, was gleichbedeutend mit der in Anspruch 5 empfohlenen Neigung um 60° bis 80° zur Umfangsrichtung ist.

Ausgehend von in der Draufsicht etwa dergestalt rechteckförmige Klötzen im Laufflächenmittenbereich, dass zumindest die voreilende Kante eines jeden dieser Klötze länger ist als die beiden daran - etwa rechtwinkelig - direkt anschließenden weiteren Kanten des selben Klotzes, empfiehlt Anspruch 6 zur Weiterbildung der Erfindung,

- dass die Einschnitt-Hauptteile um 15° bis 60° geneigt zur Orthogonalen an die voreilende Klotzkante stehen, und
- dass besagter Winkel in der Orientierung geneigt ist, dass die Hauptteile der Einschnitte in einem größeren Winkel zur Umfangsrichtung geneigt sind als die besagte voreilende Klotzkante.

Die Offenbarung der Bedeutung jenes Winkels erfordert die Einführung einiger Begriffsdefinitionen; es sei

- der Winkel zwischen der Orthogonalen an die voreilende Klotzkante und den Hauptteilen der Einschnitte als "$\alpha$",
- der Abstand (kürzestmöglicher Weg) zwischen den Hauptteilen benachbarter Einschnitte als "a",
- der Abstand (kürzestmöglicher Weg) zwischen dem linken-Hauptteil des einen und dem rechten Hauptteil des anderen, benachbarten Einschnittes (= etwa in Umfangsrichtung weisende Erstreckung des mit "G" bezeichneten Steges, der sich axial zwischen zwei Einschnittversätzen ausbildet) als "gy"
- der in Richtung der Hauptteile der Einschnitte zu messende Abstand zwischen dem Versatz des einen Einschnittes und dem Versatz des benachbarten Einschnittes (= etwa in die Axiale weisende Erstreckung von G) als "$g_x$"
- und die Länge des Einschnittversatzes als $\ell_{EV}$ bezeichnet.

Die Versatzteile der Einschnitte mögen etwa senkrecht zu den Hauptteilen der Einschnitte stehen. Dies vermeidet schwer ausformbare Positivspitzen und führt zu einer hohen Biegesteifigkeit der Positivteile. Anspruch 7 konkretisiert die Worte "etwa senkrecht" zu dem Winkelintervall von 75° bis 95° zu den jeweils angrenzenden Hauptteilen der Einschnitte.

In weiterer Vereinfachung sei im Folgenden angenommen, dass vorgenannter Winkel 90° betrage. Hiervon ausgehend gilt dann für die etwa axiale Erstreckung $g_x$ des Steges G:

$$g_x = a \tan \alpha$$

Derweil gilt für $g_y$:

$$g_y = a - \ell_{EV}$$

und demzufolge für die Fläche $A_G$ des Steges G mit verringerter Stauchsteifigkeit:

$$A_G = g_x \, g_y = a \, (a - \ell_{EV}) \tan \alpha$$

Neben der Erkenntnis, dass sich die Erfindung in einem besonders großen Anteil der Fläche eines Positiven auswirkt, wenn das - quadratisch eingehende - Abstandsmaß a groß ist (wodurch sich die Erfindung auch für solche Reifen empfiehlt, wo aus Gründen der Preisgestaltung keine allzu große Lamellenanzahl in die Vulkanisationsformen eingebaut wird), offenbart diese Gleichung auch eine zunächst lineare Abhängigkeit von $\alpha$, die über weiter steigendem $\alpha$ überproportional ansteigt.

Um wieviel die Stauchsteifigkeit im erfindungsgemäß gebildeten Stege G abgesenkt ist, hängt primär vom Verhältnis der Versatzlänge $\ell_{EV}$ zum Einschnittabstand a in der Weise ab, dass eine Vergrößerung dieses Verhältnisses zu einem größeren Absinken der Stauchsteifigkeit führt. Nachrangig hängt dieses Absinken auch von der Fläche $A_G$ ab: Wenn die Fläche abgesenkter Stauchsteifigkeit größer gewählt wird, wird der Betrag, um den die Stauchsteifigkeit abgesenkt wurde, etwas verkleinert.

Ohne dies mit einer weiteren Gleichung darstellen zu wollen, kann die Fläche $A_G$ überdies durch eine Verkleinerung des Winkels δ vergrößert werden; wie bereits ausgeführt, sollte man diesen konstruktiven Freiheitsgrad aber mit Rücksicht auf eine leichte Entformbarkeit nicht weiter als bis 75° ausreizen.

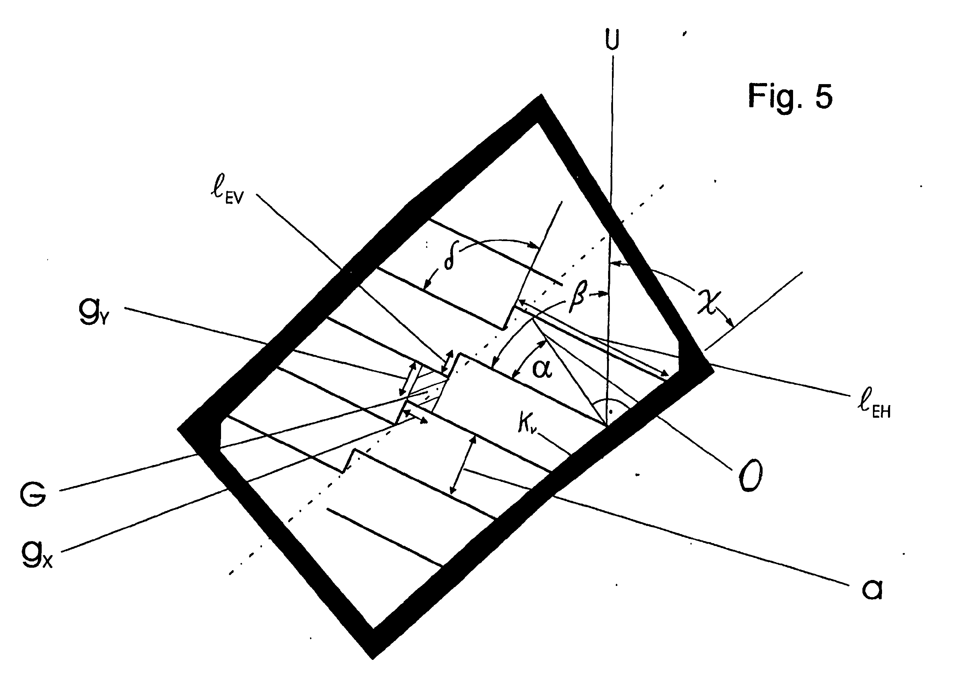

Die genannten Einflüsse von Maßvariationen ermöglichen dem Fachmann, den für eine Pressungsvergleichmäßigung besten Betrag einer Stauchsteifigkeits-Absenkung in Klotzmitte sowie die günstigste Flächengröße abgesenkter Stauchsteifigkeit zu verwirklichen. Wegen dieser allgemeinen Offenbarung ist der Schutzumfang nicht auf das nachfolgend anhand von fünf Figuren dargestellte Ausführungsbeispiel beschränkt. Dabei illustriert die Figur 5 die hier in Beziehung zueinander gebrachten Maße.

Wie im Reifenbau geläufig verläuft bei diesem Beispiel die voreilende Klotzkante eines jeden Klotzes des Laufflächenmittenbereiches in einem Winkel $\chi$ zwischen 40° und 60° zur Umfangsrichtung. Wie an sich ebenfalls geläufig umfasst dabei der Laufflächenmittenbereich zwischen 55% und 75% der Aufstandsflächenbreite.

Die Erfindung wird nachfolgend anhand der beigefügten Zeichnungen näher erläutert. Es zeigt:

Fig. 1    maßstäblich in einer schrägen Ansicht einen erfindungsgemäßen Reifen,

Fig. 2    in größerem Maßstabe in einer Draufsicht auf eine in eine Ebene projezierte Abwicklung des Laufflächenprofiles des Reifens gemäß Fig. 1 einen Ausschnitt des Laufflächenprofiles,

Fig. 3    in zur Figur 2 analogen Darstellungsweise eine zweite Variante des Laufflächenprofiles, bei dem auf Senken zwischen den Einschnitten im Bereiche der Einschnittversätze verzichtet.ist,

Fig. 4    in einem weiter vergrößerten Maßstabe einen solchen Ausschnitt aus Figur 3, der im Wesentlichen nur einen Klotz zeigt und

Fig. 5    den gleichen Klotz wie Figur 4, jedoch - in einem noch geringfügig größeren Maßstabe - mit einer Konzentration der Beschriftung auf Maßbeziehungen, insoweit sie die Wirkungsweise der Erfindung beeinflussen.

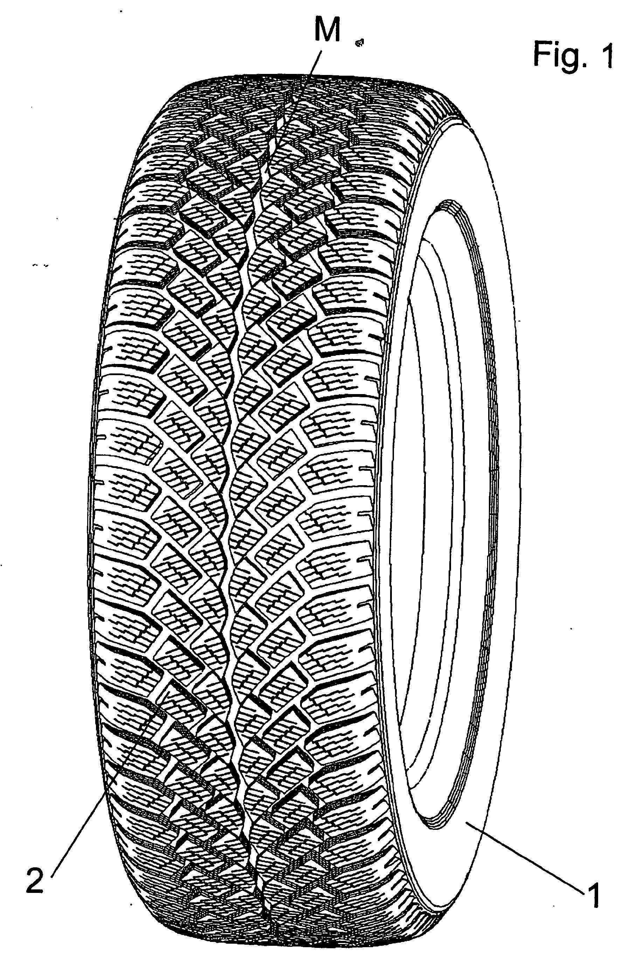

Figur 1 zeigt maßstäblich in einer schrägen Ansicht einen vollständigen erfindungsgemäßen Reifen 1 mit seiner Lauffläche und dem darin eingeprägten Profil 2. Dieses Laufflächenprofil 2 weist in seiner Mitte eine gewellte Mittelrille M auf. Links und rechts davon schließen je zwei Reihen von Profilklötzen an, die zusammen den LaufflächenMittenbereich bilden. Axial außerhalb davon schließt sich je eine Schulterklotzreihe an, die zum Rande hin stetig in ein Seitendekor übergeht, welches nur beim Erklettern von Bordsteinkanten in Kontakt tritt.

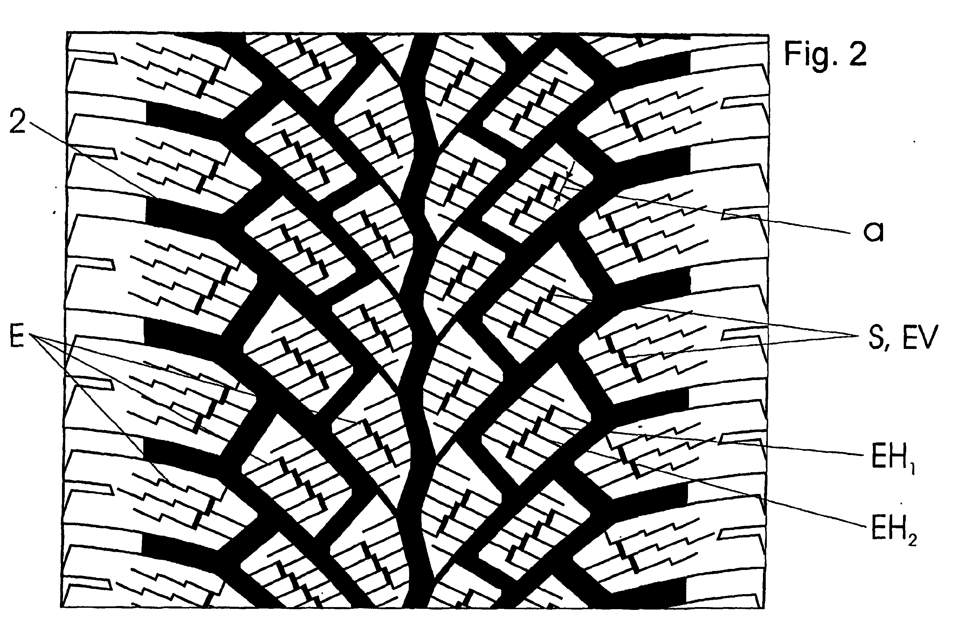

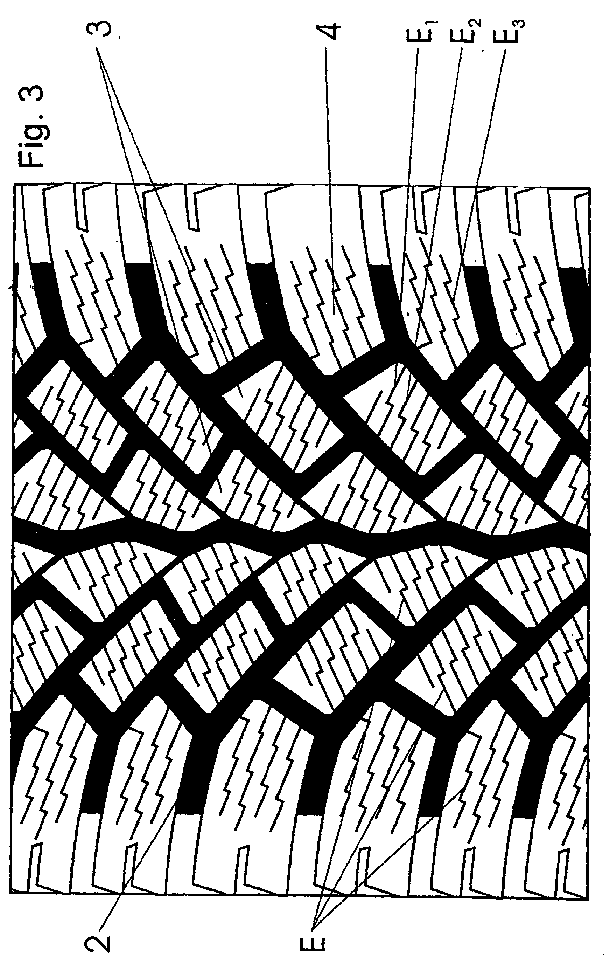

Weil sich das Erfindungswesentliche besser anhand der in Figur 3 gezeigten, vereinfachten Variante des Ausführungsbeispieles zeigen lässt als anhand der Variante gemäß Figur 2, wird diese im Folgenden zuerst beschrieben. Dabei ist - um die erfindungsgemäßen Merkmale besser darstellen zu können - für diese Draufsicht auf einen Ausschnitt der in eine Ebene projezierten Abwicklung des Laufflächenprofiles 2 ein größerer Maßstab gewählt als in Figur 1.

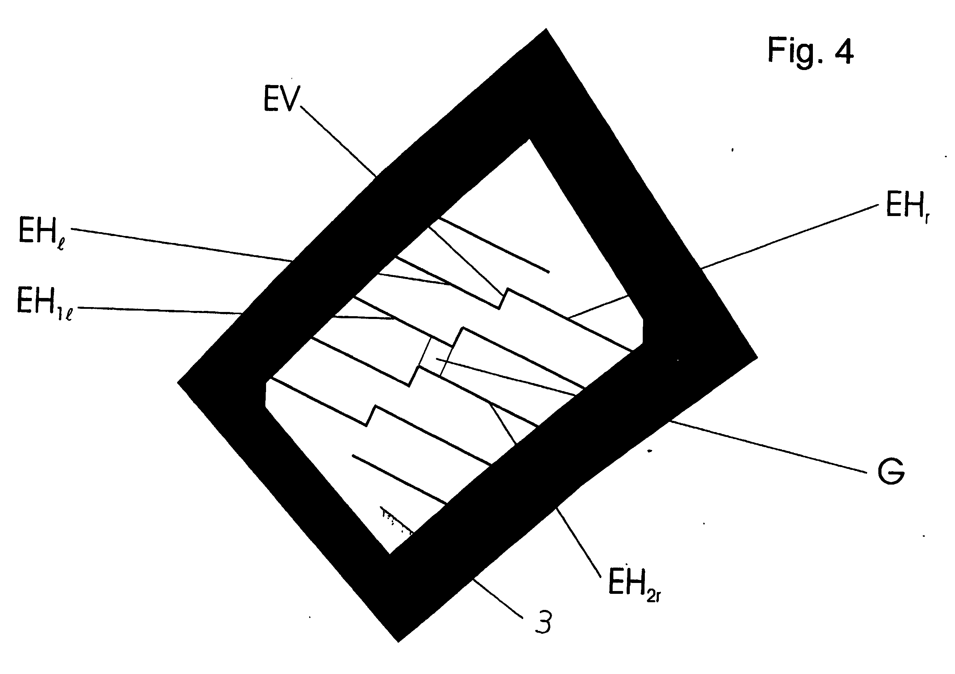

Hier sind zwei verschiedene Typen erfindungsgemäßer Einschnitte E gezeigt, nämlich 1-fach.getreppte Einschnitte $E_1$ und $E_2$ in den vier Reihen von Klötzen 3 des Laufflächenmittenbereiches und 2-fach und 3-fach getreppte Einschnitte $E_3$ in der linken und in der rechten Reihe von Schulterklötzen 4. Die Wirkungsweise tritt an den 1-fach getreppten Einschnitten $E_1$ und $E_2$ besonders deutlich hervor und wird darum anhand der später beschriebenen Figuren 4 und 5 näher erläutert.

In einer Weiterentwicklung des Ausführungsbeispieles nach den Figuren 3, 4 und 5 zeichnet sich die in Figur 2 - auf die hiermit zurückgekommen wird - gezeigte Variante des Laufflächenprofiles 2 dadurch aus, dass zwischen den Einschnitten E im Bereiche der Einschnittversätze EV kleine Senken S angeordnet sind. Dabei stimmt die Darstellungsweise mit der von Figur 3 völlig überein, insbesondere liegt also der gleiche Maßstab bezogen auf die gleiche Reifengröße vor. Figur 2 zeigt den gleichen Reifens 1 wie Figur 1.

Die kleinen Senken S verändern die Steifigkeitsverteilung im Laufflächenprofil kaum und verringern den Gesamtflächeninhalt der Positive innerhalb des Latsches nur ganz unwesentlich. Auch die Geräuschentwicklung - bei Sacknegativen erwartet der Fachmann normalerweise eine Erhöhung - wird nicht verschlechtert aufgrund der Kleinheit dieser Senken S im Verhältnis zur Weite der daran anschließenden Einschnitte.

Die kleinen, zahlreichen Senken S an den Versatzstellen EV der Einschnitte E verbessern aber die Mikroentwässerung aus den Einschnitten heraus, was die Abfuhr von Schmelzwasser aus der Bodenaufstandsfläche verbessert. Anders als bei regennasser Straße, wo wesentlich größere Wassermengen vom Latscheinlauf her in den Latsch gelangen und tunlichst im vorderen Drittel des Latsches wieder ausgetrieben werden, entsteht beim Fahren auf Eis erst im Latsch durch Aufschmelzen ein dünner Wasserfilm.

Die dabei entstehende Wassermenge hängt natürlich von der Eistemperatur ab; warmes Eis lässt besonders viel Schmelzwasser entstehen und ist deshalb besonders schwer befahrbar.

Obwohl selbst im Falle von warmem Eise die anfallenden Wassermengen geringer sind als bei regennasser Straße, ist der Griffigkeitsabfall besonders heftig, weil das Eis nahezu rauigkeitslos ist. Darum kann bereits eine sehr kleine Menge von Wasser zur vollständigen Separierung der Lauffläche vom festen Untergrunde führen.

Für Verbesserungen in der schwierigsten Disziplin eines Winterreifens - dem Eisgriff ohne Spikes - schlagen die Erfinder nach Erlangung oben wiedergegebener Erkenntnis vor, sehr fein verteilt Wasseraufnahmekapazitäten in der Lauffläche zu schaffen, um selbst kleinste Wassermengen schnell aufzunehmen. Eine jede dieser Senken ist eine solche Wasseraufnahmekapazität. Da die aufzunehmende Wassermenge klein und zudem die Senkenanzahl - zur Verwirklichung extrem kurzer Abfuhrwege - hoch ist, kann jede der Senken ausgesprochen klein bemessen sein, so klein, dass sie im Maßstabe der Figur 1 kaum erkennbar ist. Vorzugsweise handelt es sich nur um eine Einschnittserweiterung im Bereiche eines jeden Einschnittversatzes EV.

Vorzugsweise ist eine jede Senke S nur in dem Bereich des jeweiligen Einschnittversatzes EV, wie ihn Figur 3 zeigt, tief, besonders bevorzugt bis herunter zum Profilgrund, ausgeführt; die sichtbare Verlängerung der Senke S bis zum nächsten Einschnitt E hat hingegen nur ästhetische Bedeutung und ist vorzugsweise nur 1 mm tief.

Gemäß Anspruch 9 sind die bevorzugten Senken in der Draufsicht im Wesentlichen rechteck- oder parallelogramförmig. Eine solche Gestaltung beeinträchtigt die Wirkung der Profilpositive am wenigsten und ist leicht herstellbar. Dabei ist gemäß Anspruch 10 besonders bevorzugt, dass die Senkenbreite dem 0,1-fachen bis 0,3-fachen des Abstandes a zwischen den Einschnitthauptteilen $EH_1$ und $EH_2$ entspricht.

Figur 4 zeigt in einem weiter vergrößerten Maßstabe einen solchen Ausschnitt aus Figur 3, der im Wesentlichen nur einen Klotz 3 aus dem Laufflächenmittenbereich zeigt.

Abgesehen vom ersten und letzten Einschnitt, die jeweils als Halbsackeinschnitte ausgeführt sind, ist jeder andere Einschnitt in drei Teile gegliedert, nämlich einen linken Hauptteil $EH_\ell$, einen rechts daran anschließenden Versatz EV und einen wiederum rechts daran anschließenden rechten Hauptteil $EH_r$. Ein beliebiges Paar von solchen aufeinander folgenden Einschnitten $E_1$ und $E_2$ herausgreifend, wie sie in der Vorgängerfigur 3 markiert sind (und hier in Figur 4 nicht, um die Figur nicht graphisch zu überfrachten) ist das Zusammenwirken des linken Hauptteiles $EH_{1\ell}$ des Einschnittes $E_1$ und des rechten Hauptteiles $EH_{2r}$ des Einschnittes $E_2$ verdeutlicht: Es bildet sich nämlich ein stegartiger Bereich G, ein geschmälerter Positivteil, dazwischen. Diese Verschmälerung bewirkt die gewünschte Absenkung der Stauchsteifigkeit. Die in dünnster Linie links und rechts von G gezeigte Begrenzung ist dabei keine Körperkante sondern eine gedachte Linie, die lediglich der Konkretisierung des neuen Begriffes "Steg G" dient.

Dieser für ein beliebig herausgegriffenes Paar aufeinander folgender und gekröpfter Einschnitte beschriebene Effekt einer Steg- oder Positiv-Engstellen-Erzeugung gilt bevorzugt auch für jedes andere Paar von aufeinander folgenden und gekröpften Einschnitten.

Figur 5 zeigt den gleichen Klotz wie Figur 4, jedoch - in einem noch geringfügig größeren Maßstabe - mit einer Konzentration der Beschriftung auf Maßbeziehungen, insoweit sie die Wirkungsweise der Erfindung beeinflussen. Diese Figur nimmt Bezug auf die Maßdiskussion, die auf Seite 8, Zeile 8 beginnt und bis Seite 10, Zeile 16.

Sie illustriert ferner das Maß β als Winkel zwischen der Umfangsrichtung U und den Hauptteilen der Einschnitte sowie den Winkel χ zwischen der voreilenden Klotzkante $K_v$ und der Umfangsrichtung U.

Die folgende Bezugszeichenliste ist Bestandteil der Beschreibung:

| | |
|---|---|
| 1 | Fahrzeugreifen |
| 2 | Laufflächenprofil |
| 3 | Profilpositive im Laufflächenmittenbereich |
| 4 | Profilpositive im Laufflächenrandbereich (= Schulterklötze) |
| a | Abstand zwischen zwei benachbarten Einschnitten |
| | $a_m$ mittlerer Abstand zwischen zwei benachbarten Einschnitten (E) |
| E | Einschnitte |
| | $E_1$ ein erster, beliebig im Laufflächenmittenbereich individualisierter Einschnitt aus einer Schar paralleler Einschnitte, die ein Raster bilden |
| | $E_2$ ein auf $E_1$ folgender und zur gleichen Schar paralleler Einschnitte gehörender zweiter Einschnitt im Laufflächenmittenbereich |
| | $E_3$ parallele Einschnitte in den Randbereichen der Lauffläche, die ein etwas anderes Raster bilden |
| | EV treppenartiger Versatzteil eines Einschnittes (E) |
| | EH Hauptteile eines Einschnittes (E) |
| | $EH_1$ Hauptteile eines bestimmten Einschnittes $E_1$ |
| | $EH_2$ Hauptteile eines bestimmten Einschnittes $E_2$ |
| | $EH_\ell$ Hauptteil eines Einschnittes (E) links vom Versatzteil EV |
| | $EH_r$ Hauptteil eines Einschnittes (E) rechts vom Versatzteil EV |
| | $EH_{1\ell}$ Hauptteil eines bestimmten Einschnittes E1 links von dessen Versatzteil $EV_1$ |
| | $EH_{2r}$ Hauptteil eines bestimmten Einschnittes E2 rechts von dessen Versatzteil $EV_2$ |
| $\ell_{EV}$ | Länge des Versatzteiles (EV) = Versatzteillänge |
| $\ell_{EH}$ | Länge des Hauptteils (EH) = Hauptteillänge |
| | |
| G | Gummisteg |
| $K_v$ | voreilende Klotzkante |
| M | Mittelrille in 2 |
| O | Orthogonale an $K_v$ |

S    kleine Senken zwischen den Einschnitten E im Bereiche der Einschnittversätze EV (Figuren 1 und 2)

$\alpha$    Neigung von EH gegenüber O
$\beta$    Neigung von EH gegenüber U
$\chi$    Neigung von $K_v$ gegenüber U
$\delta$    Neigung von EH gegenüber EV

**Patentansprüche**

1.  Fahrzeugreifen (1) mit einem Laufflächenprofil (2) für guten Schnee- und Eisgriff

    - wobei innerhalb von Profilpositiven (3, 4) [= Klötze und/oder Rippen] im Wesentlichen zueinander parallele Einschnitte ($E_1$, $E_2$, $E_3$) angeordnet sind,
    - wobei der Abstand (a) zwischen benachbarten Einschnitten (E) des selben Profilpositiven (3 oder 4) um höchstens 20% schwankt, vorzugsweise konstant ist,
    - wobei der mittlere Abstand ($a_m$) zwischen zwei benachbarten Einschnitten (E) zwischen 3 mm und 7 mm beträgt,
    - wobei eine Vielzahl von Einschnitten (E) - vorzugsweise alle Einschnitte (E) - in der Draufsicht zumindest einen nahezu rechtwinkelig treppenartigen Versatzteil (EV) aufweist,
    - wobei die Länge ($\ell_{EV}$) des Versatzteiles (EV) höchstens die Hälfte der Länge ($\ell_{EH}$) des Hauptteils (EH) des Einschnittes (E) beträgt,

    **dadurch gekennzeichnet,**

    - **dass** die Versatzteile (EV) in benachbarten Einschnitten ($E_1$, $E_2$) des selben Profilpositiven (3) gegeneinander versetzt sind,
    - und zwar so, dass sich zwischen den besagten Versatzteilen (EV) jeweils ein Gummisteg (G) befindet, dessen Erstreckung quer zur Erstreckung der beiden angrenzenden Hauptteile ($EH_1$, $EH_2$) nur 30% bis 70 % des Abstandes (a) zwischen den Hauptteilen ($EH_1$, $EH_2$) beträgt.

2.  Fahrzeugreifen (1) nach Anspruch 1, **dadurch gekennzeichnet, dass** die Länge des Hauptteiles das 1,5-fache bis 3-fache des mittleren Abstandes ($a_m$) zwischen benachbarten Einschnitten (E) beträgt.

3.  Fahrzeugreifen (1) nach Anspruch 2, **dadurch gekennzeichnet,**

    - **dass** in an sich bekannter Weise die axial äußeren Profilpositive (4) in der axialen Richtung von größerer Erstreckung sind als die Profilpositive im Laufflächenmittenbereich,
    - wobei die Einschnitte ($E_3$) in den axial äußeren Profilpositiven (4) mehrfach getreppt sind.

4.  Fahrzeugreifen (1) nach Anspruch 3, **dadurch gekennzeichnet, dass** die Einschnitte ($E_1$, $E_2$) in den Profilpositiven (3) des Laufflächenmittenbereiches nur 1-fach getreppt sind.

5.  Fahrzeugreifen (1) nach einem der vorangehenden Ansprüche, **dadurch gekennzeichnet, dass** die Hauptteile (EH) der Einschnitte ($E_1$, $E_2$, $E_3$) in einem Winkel ($\beta$) zwischen 60° und 80° zur Umfangsrichtung geneigt sind.

6.  Fahrzeugreifen (1) nach einem der vorangehenden Ansprüche, **dadurch gekennzeichnet,**

    - **dass** in an sich bekannter Weise die Profilpositive (3) des Laufflächenmittenbereiches als Klötze vorliegen,
    - die in an sich bekannter Weise in der Draufsicht von etwa rechteckförmigem Grundriss sind,
    - wobei in an sich bekannter Weise zumindest die voreilende Kante ($K_v$) eines jeden dieser Klötze länger ist als die beiden daran direkt anschließenden weiteren Kanten des selben Klotzes,
    - wobei die Hauptteile (EH) der Einschnitte ($E_1$, $E_2$) in einem Winkel ($\alpha$) zwischen 15° und 60° zur Orthogonalen (O) an die voreilende Klotzkante ($K_v$) stehen,
    - wobei besagter Winkel ($\alpha$) in der Orientierung geneigt ist, dass die Hauptteile (EH) der Einschnitte ($E_1$, $E_2$) in einem betragsmäßig größeren Winkel ($\beta$) zur Umfangsrichtung (U) geneigt sind, als ($\chi$) die besagte voreilende Klotzkante ($K_v$).

7.  Fahrzeugreifen (1) nach Anspruch 1, **dadurch gekennzeichnet, dass** die Versatzteile (EV) der Einschnitte ($E_1$,

$E_2$) in einem Winkel ($\delta$) zwischen 75° und 95° zu den jeweils angrenzenden Hauptteilen (EH) der Einschnitte ($E_1$, $E_2$) stehen.

**8.** Fahrzeugreifen nach Anspruch 1, **dadurch gekennzeichnet, dass** besagte voreilende Klotzkante ($K_v$) eines jeden Klotzes (3) des Laufflächenmittenbereiches in einem Winkel ($\chi$) zwischen 40° und 60° zur Umfangsrichtung verläuft.

**9.** Fahrzeugreifen (1) nach einem der vorangehenden Ansprüche, **dadurch gekennzeichnet, dass** zumindest einige der im Laufflächenmittenbereich angeordneten Einschnitte ($E_1$, $E_2$) angrenzend an einen ihrer Versatzteile (EV) eine in der Draufsicht im Wesentlichen rechteck- oder parallelogramförmige Senke (S) aufweisen.

**10.** Fahrzeugreifen (1) nach Anspruch 9, **dadurch gekennzeichnet, dass** die Senkenlänge dem Abstande (a) zwischen den beiden damit fluchtenden Einschnitthauptteilen ($EH_1$, $EH_2$) entspricht und die Senkenbreite dem 0,1-fachen bis 0,3-fachen des selben Abstandes (a).

**Revendications**

**1.** Bandage pneumatique (1) pour véhicule, comprenant un profil de bande de roulement (2) ayant une bonne adhérence sur la neige et la glace,

- des entailles ($E_1$, $E_2$, $E_3$) essentiellement parallèles étant disposées à l'intérieur des parties positives du profil (3, 4) [= blocs et/ou côtes],
- la distance (a) entre des entailles adjacentes (E) de la même partie positive du profil (3 ou 4) variant au maximum de 20%, de préférence étant constante,
- la distance moyenne ($a_m$) entre deux entailles adjacentes (E) étant comprise entre 3 mm et 7 mm,
- une pluralité d'entailles (E) - de préférence toutes les entailles (E) - présentant, en vue de dessus, au moins une partie décalée (EV) en forme d'escalier pratiquement à angle droit,
- la longueur ($l_{EV}$) de la partie décalée (EV) valant au maximum la moitié de la longueur ($l_{EH}$) de la partie principale (EH) de l'entaille (E),

**caractérisé en ce que**

- les parties décalées (EV) dans des entailles voisines ($E_1$, $E_2$) de la même partie positive du profil (3) sont décalées les unes par rapport aux autres,
- et ce, de telle sorte qu'une nervure en caoutchouc (G) se trouve à chaque fois entre lesdites parties décalées (EV), dont l'étendue transversalement à l'étendue des deux parties principales adjacentes ($EH_1$, $EH_2$) ne vaut que 30% à 70% de la distance (a) entre les parties principales ($EH_1$, $EH_2$).

**2.** Bandage pneumatique (1) pour véhicule selon la revendication 1, **caractérisé en ce que** la longueur de la partie principale vaut 1,5 à 3 fois la distance moyenne ($a_m$) entre des entailles voisines (E).

**3.** Bandage pneumatique (1) pour véhicule selon la revendication 2, **caractérisé en ce que**

- de manière connue en soi, les parties positives du profil (4) axialement extérieures dans la direction axiale ont une étendue plus importante que les parties positives du profil dans la région du centre de la bande de roulement,
- les entailles ($E_3$) dans les parties positives du profil (4) axialement extérieures étant plusieurs fois étagées.

**4.** Bandage pneumatique (1) pour véhicule selon la revendication 3, **caractérisé en ce que** les entailles ($E_1$, $E_2$) sont seulement étagées 1 seule fois dans les parties positives du profil (3) de la région centrale de la bande de roulement.

**5.** Bandage pneumatique (1) pour véhicule selon l'une quelconque des revendications précédentes, **caractérisé en ce que** les parties principales (EH) des entailles ($E_1$, $E_2$, $E_3$) sont inclinées par rapport à la direction périphérique d'un angle ($\beta$) compris entre 60° et 80°.

**6.** Bandage pneumatique (1) pour véhicule selon l'une quelconque des revendications précédentes, **caractérisé en ce que**

- de manière connue en soi, les parties positives du profil (3) de la région centrale de la bande de roulement se présentent sous la forme de blocs,
- qui, de manière connue en soi, ont une projection horizontale approximativement rectangulaire en vue de dessus,
- au moins l'arête avant ($K_v$) de chacun de ces blocs étant plus longue, de manière connue en soi, que les deux arêtes supplémentaires du même bloc s'y raccordant directement,
- les parties principales (EH) des entailles ($E_1$, $E_2$) étant orientées suivant un angle ($\alpha$) compris entre 15° et 60° par rapport à la perpendiculaire (O) à l'arête avant du bloc ($K_v$),
- ledit angle ($\alpha$) étant incliné dans une orientation telle que les parties principales (EH) des entailles ($E_1$, $E_2$) soient inclinées suivant un angle ($\beta$) quantitativement plus grand par rapport à la direction périphérique (U), que l'angle (x) de ladite arête de bloc avant ($K_v$).

7. Bandage pneumatique (1) pour véhicule selon la revendication 1, **caractérisé en ce que** les parties décalées (EV) des entailles ($E_1$, $E_2$) sont orientées suivant un angle ($\delta$) compris entre 75° et 95° par rapport aux parties principales respectivement adjacentes (EH) des entailles ($E_1$, $E_2$).

8. Bandage pneumatique (1) pour véhicule selon la revendication 1, **caractérisé en ce que** ladite arête avant du bloc ($K_v$) de chacun des blocs (3) de la région centrale de la bande de roulement s'étend suivant un angle ($\chi$) compris entre 40° et 60° par rapport à la direction périphérique.

9. Bandage pneumatique (1) pour véhicule selon l'une quelconque des revendications précédentes, **caractérisé en ce qu'**au moins quelques-unes des entailles ($E_1$, $E_2$) disposées dans la région centrale de la bande de roulement présentent une dépression (S) essentiellement en forme de rectangle ou de parallélogramme en vue de dessus, à proximité de l'une de leurs parties décalées (EV).

10. Bandage pneumatique (1) pour véhicule selon la revendication 9, **caractérisé en ce que** la longueur des dépressions correspond à la distance (a) entre les deux parties principales d'entaille ($EH_1$, $EH_2$) en affleurement avec celle-ci et la largeur des dépressions correspond à 0,1 à 0,3 fois cette distance (a).

## Claims

1. Vehicle tyre (1) with a tread profile (2) for good grip on snow and ice

   - with indents ($E_1$, $E_2$, $E_3$) which are essentially parallel to one another being arranged inside profile positives (3, 4) [= blocks and/or ribs],
   - with the distance (a) between adjacent indents (E) of the same profile positive (3 or 4) fluctuating by at most 20%, and preferably being constant,
   - with the average distance ($a_m$) between two adjacent indents (E) being between 3 mm and 7 mm,
   - with a plurality of indents (E) - preferably all the indents (E) - having, in plan view, at least one offset part (EV) which is virtually right-angled in the manner of a step,
   - with the length ($l_{EV}$) of the offset part (EV) being at most half the length ($l_{EH}$) of the main part (EH) of the indent (E),

   **characterized**

   - **in that** the offset parts (EV) in adjacent indents ($E_1$, $E_2$) of the same profile positive (3) are offset with respect to one another,
   - specifically in such a way that in each case a rubber web (G), whose extent in the transverse direction with respect to the extent of the two adjoining main parts ($EH_1$, $EH_2$) is only 30% to 70% of the distance (a) between the main parts ($EH_1$, $EH_2$) is located between the aforesaid offset parts (EV).

2. Vehicle tyre (1) according to Claim 1, **characterized in that** the length of the main part is 1.5 times to 3 times the average distance ($a_m$) between adjacent indents (E).

3. Vehicle tyre (1) according to Claim 2, **characterized**

   - **in that**, in a manner known per se, the axially outer profile positives (4) in the axial direction have a greater extent than the profile positives in the central region of the tread,

- with the indents (E$_3$) in the axially outer profile positives (4) having multiple steps.

4. Vehicle tyre (1) according to Claim 3, **characterized in that** the indents (E$_1$, E$_2$) in the profile positives (3) of the central region of the tread have only a single step.

5. Vehicle tyre (1) according to one of the preceding claims, **characterized in that** the main parts (EH) of the indents (E$_1$, E$_2$, E$_3$) are inclined at an angle (β) between 60° and 80° with respect to the circumferential direction.

6. Vehicle tyre (1) according to one of the preceding claims, **characterized**

   - **in that**, in a manner known per se, the profile positives (3) of the central region of the tread are in the form of blocks,
   - which, in a manner known per se, have approximately rectangular horizontal projection,
   - in which case, in a manner known per se, at least the leading edge (K$_v$) of each of these blocks is longer than the two further edges of the same block which directly adjoin it,
   - with the main parts (EH) of the indents (E$_1$, E$_2$) being at an angle (α) between 15° and 60° with respect to the orthogonal (O) to the leading block edge (K$_v$),
   - with the aforesaid angle (α) being inclined in orientation, in that the main parts (EH) of the indents (E$_1$, E$_2$) are inclined at an angle (β) to the circumferential direction (U) which is larger in absolute terms than (χ) the aforesaid leading block edge (K$_v$).

7. Vehicle tyre (1) according to Claim 1, **characterized in that** the offset parts (EV) of the indents (E$_1$, E$_2$) are at an angle (δ) between 75° and 95° to the respectively adjoining main parts (EH) of the indents (E$_1$, E$_2$).

8. Vehicle tyre according to Claim 1, **characterized in that** the aforesaid leading block edge (K$_v$) of each block (3) of the central region of the tread extends at an angle (χ) between 40° and 60° with respect to the circumferential direction.

9. Vehicle tyre (1) according to one of the preceding claims, **characterized in that** at least some of the indents (E$_1$, E$_2$) which are arranged in the central region of the tread have, adjacent to one of their offset parts (EV), a sink (S) which is essentially rectangular or parallelogram-shaped in plan view.

10. Vehicle tyre (1) according to Claim 9, **characterized in that** the sink length corresponds to the distance (a) between the two indent main parts (EH$_1$, EH$_2$) which are aligned therewith, and the sink width corresponds to 0.1 times to 0.3 times the same distance (a).

Fig. 1

M

2

1

Fig. 2

EP 1 215 055 B1

Fig. 3

Fig. 4

Fig. 5